(19) Europäisches Patentamt / European Patent Office / Office européen des brevets

(11) **EP 2 648 923 B1**

(12) **EUROPÄISCHE PATENTSCHRIFT**

(45) Veröffentlichungstag und Bekanntmachung des Hinweises auf die Patenterteilung:
**27.04.2016   Patentblatt 2016/17**

(21) Anmeldenummer: **11787787.8**

(22) Anmeldetag: **09.11.2011**

(51) Int Cl.:
**B42D 25/324** (2014.01)      **B42D 25/41** (2014.01)
**G02B 27/22** (2006.01)      **G02B 3/00** (2006.01)

(86) Internationale Anmeldenummer:
**PCT/EP2011/005620**

(87) Internationale Veröffentlichungsnummer:
**WO 2012/076091 (14.06.2012 Gazette 2012/24)**

(54) **KARTENFÖRMIGER DATENTRÄGER MIT SICHERHEITSELEMENT UND HERSTELLUNGSVERFAHREN**

CARD-TYPE DATA CARRIER WITH SECURITY ELEMENT AND MANUFACTURING METHOD

SUPPORTS DE DONNÉES EN FORME DE CARTE AVEC ÉLÉMENT DE SÉCURITÉ ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2010   DE 102010053679**

(43) Veröffentlichungstag der Anmeldung:
**16.10.2013   Patentblatt 2013/42**

(73) Patentinhaber: **Giesecke & Devrient GmbH 81677 München (DE)**

(72) Erfinder:
• **ENDRES, Günter 81547 München (DE)**
• **REINER, Harald 81371 München (DE)**

(56) Entgegenhaltungen:
**WO-A2-2005/052650      DE-A1-102009 006 301 US-A1- 2005 152 040**

• **Rudolf L. van Renesse: "Optical Document Security (third edition)", 2005, Artech House, Boston, XP002668646, ISBN: 1-58053-258-6 Seiten 86-87; Abbildung 3.31**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitselement für kartenförmige Datenträger zur Darstellung eines oder mehrerer Sollbilder, ein entsprechendes Herstellungsverfahren sowie einen entsprechenden kartenförmigen Datenträger.

Kartenförmige Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Kartenförmige Datenträger im Sinne der vorliegenden Erfindung sind etwa Kreditkarten, Scheckkarten, Chipkarten, Gesundheitskarten, kartenförmige Pässe, Ausweise und sonstige Datenträger im ID0-, im ID1- oder im ID2-Format, sowie Produktsicherungselemente, wie Etiketten, Siegel, Verpackungen und dekorative Artikel wie Glückwunschkarten, Bilder als Wandschmuck, Vorhänge, Tischauflagen, Schlüsselanhänger und dergleichen. Der Begriff "Datenträger" bezieht sich im Folgenden auf kartenförmige Datenträger. Diese besitzen typischerweise einen vollständig aus Kunststoff, beispielsweise Polycarbonat, aufgebauten Kartenkörper, der eine Dicke zwischen 0,3 mm und 5 mm aufweist. Solche kartenförmigen Datenträger sind nicht zum Falten oder Knicken vorgesehen. Vielmehr weist der Kartenkörper eine mechanische Stabilität auf, die deutlich höher ist als die mechanische Stabilität von Papierdokumenten oder Dokumenten mit ähnlicher mechanischer Stabilität wie beispielsweise Folien- oder Kunststoffbanknoten.

Eine besondere Rolle spielen Sicherheitselemente mit optisch variablen Elementen, die dem Betrachter unter unterschiedlichen Betrachtungswinkeln, das heißt bei Verkippung, einen unterschiedlichen Bildeindruck vermitteln. Solche Sicherheitselemente können selbst mit hochwertigen Farbkopiergeräten nicht reproduziert werden. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Aus der Druckschrift US 5 712 731 A ist die Verwendung einer Moiré-Vergrößerungsanordnung als Sicherheitsmerkmal bekannt. Die dort beschriebene Sicherheitsvorrichtung weist eine regelmäßige Anordnung von im Wesentlichen identischen, gedruckten Mikrobildern mit einer Größe bis zu 250 μm auf, sowie eine regelmäßige zweidimensionale Anordnung von im Wesentlichen identischen sphärischen Mikrolinsen. Die Mikrolinsenanordnung weist dabei im Wesentlichen dieselbe Einteilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moiré-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Danach bezeichnet der Begriff "Moiré-Vergrößerung" ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das in diesem Fall als vergrößertes und gegebenenfalls gedrehtes Bild der wiederholten Elemente des Bildrasters erscheint.

Weiterhin ist es bekannt anstelle eines Rasters mit sphärischen Linsen ein Zylinderlinsenraster vorzusehen mit entweder einem horizontal angeordneten MLI (Multiple Laser Image)-Raster, das eine Betrachtung der verschiedenen Bilder eines Kippbilds bei Verkippung in vertikaler Richtung gestattet, oder einem vertikal angeordneten CLI (Changeable Laser Image)-Raster, dass eine Betrachtung der verschiedenen Bilder eines Kippbilds bei Verkippung in horizontaler Richtung gestattet.

Aus der US 2005/0152040 A1 ist ein Datenträger mit einem Linsenraster und einem unmittelbar darunter liegendem Druckbild bekannt, welches durch Verkippung des Datenträgers optische Effekte zeigt. Das Druckbild wird im Herstellungsprozess des Datenträgers in diesen eingebracht und ist für alle Datenträger gleich, kann also nicht individualisiert werden.

Davon ausgehend liegt der Erfindung die Aufgabe zugrunde ein Sicherheitselement für einen kartenförmigen Datenträger zu schaffen, das bei Verkippung auffällige optische Effekte eines dargestellten Motivs zeigt, die für verschiedene Verkippungsrichtungen ähnlich oder identisch sind, das einen großen Spielraum bei der Gestaltung der dargestellten Motive bietet, individualisierbar ist und das zugleich einfach hergestellt werden kann. Es ist weiterhin Aufgabe einen entsprechenden kartenförmigen Datenträger anzugeben.

Diese Aufgabe wird durch den kartenförmigen Datenträger mit dem Sicherheitsmerkmal, das Herstellungsverfahren, mit den Merkmalen der unabhängigen Ansprüche gelöst. Weiterbildungen der Erfindung sind Gegenstand der Unteransprüche.

Ein Sicherheitselement zur Einbringung in einen kartenförmigen Datenträger mit zwei Hauptachsen umfasst eine Rasterbildanordnung zur Darstellung eines durch eine Bildfunktion gegebenen Sollbildes, ein aufgedrucktes Motivbild, das in eine Mehrzahl von Zellen eingeteilt ist, in denen jeweils abgebildete Bereiche des Sollbilds angeordnet sind, und ein zylinderartiges Betrachtungsraster aus einer Mehrzahl von periodisch angeordneten, zylinderförmigen Betrachtungselementen mit jeweils zueinander parallelen Zylinderachsen zur Rekonstruktion des Sollbildes bei der Betrachtung des Motivbilds mithilfe des Betrachtungsrasters, wobei das Betrachtungsraster und das Motivbild unter einem vorgegebenen Abstand zueinander angeordnet sind. Dabei ist das Motivbild mit seiner Einteilung in eine Mehrzahl von Zellen durch die Bildfunktion. gegeben.

Das erfindungsgemäße Sicherheitselement enthält eine Rasterbildanordnung, bei der ein Motiv (das Sollbild) einzeln dargestellt werden kann und nicht notwendig als Array dargestellt werden muss. Dabei kann der optische Eindruck vermittelt werden, dass das Motiv vor oder hinter der Bildebene zu schweben scheint. Das Sollbild bewegt sich beim Kippen des Sicherheitselements, das durch das übereinander angeordnete Motivbild und das Betrachtungsraster gebildet wird, in durch die Vergrößerungs- und Bewegungsmatrix A beschriebene Richtungen. Das Motivbild wird nicht photographisch, auch nicht durch Belichtung durch ein Belichtungsraster erzeugt, sondern mathematisch mit einem Modulo-Algorithmus konstruiert, wobei eine Vielzahl verschiedener Vergrößerungs- und Bewegungseffekte erzeugt werden können, die nachfolgend genauer beschrieben werden.

Bei dem eingangs genannten, bekannten Moire-Magnifier besteht das darzustellende Bild aus Einzelmotiven, die periodisch dargestellt werden. Das durch die Linsen zu betrachtende, beispielsweise aufgedruckte Motivbild stellt eine stark verkleinerte Version des darzustellenden Bildes dar, wobei die jedem Einzelmotiv zugeordnete Fläche maximal etwa einer Einheitszelle des Betrachtungsrasters entspricht. Aufgrund der Kleinheit der verwendeten Linsen (die typischerweise im Bereich von 10 $\mu$m liegt) kommen als Einzelmotive nur relativ einfache Gebilde infrage. Im Gegensatz dazu ist das Sollbild beim hier beschriebenen Sicherheitselement im Allgemeinen ein Einzelbild, es muss sich nicht zwangsläufig aus einem Gitter periodisch wiederholter Einzelmotive zusammensetzen. Mit Hilfe des erfindungsgemäßen Sicherheitselements kann daher ein komplexes Sollbild als Einzelbild mit hoher Auflösung darstellt werden, das zudem noch vorbestimmte Vergrößerungs- und Bewegungseffekte, sowie einen Tiefeneffekt zeigt, das heißt einen dreidimensionalen Effekt.

Zudem ist das Betrachtungsraster, und entsprechend auch das Raster des aufgedruckten Motivbildes, erfindungsgemäß zylinderförmig ausgebildet, das heißt das Betrachtungsraster besteht aus langgestreckten, durchgehenden Betrachtungselementen, die sich bevorzugt über die gesamte Ausdehnung des Sicherheitselements erstrecken. Die sich daraus ergebenden Einzelzellen des Rasters des aufgedruckten Motivbildes und des Betrachtungsrasters sind deutlich größer ist als die Einzelzellen die sich bei punktförmigen Rastern, beispielsweise bei den bekannten Betrachtungsrastern mit sphärischen Linsen, ergeben. Durch die größeren Einzelzellen können die beiden Raster technisch leichter realisiert werden, was den Aufwand bei der Herstellung des erfindungsgemäßen Sicherheitselements reduziert.

Beispielsweise werden geringere Anforderungen an die Auflösung des in Betrachtungsrichtung hinter dem Betrachtungsraster liegenden Motivbildes gestellt, weswegen dieses Motivbild ein aufgedrucktes Motivbild sein kann. Dies gestattet zum einen die Verwendung von Druckverfahren an sich und zum anderen die Verwendung von Druckverfahren die unaufwändig sind und/oder bei der Herstellung von kartenförmigen Datenträgern ohnehin verwendet werden, wie beispielsweise Offsetdruck, Tiefdruck, Hochdruck, Siebdruck, oder digitale Druckverfahren, wie etwa Tintenstrahldruck oder Laserdruck. Besonders vorteilhaft ist die Verwendung des Toray-Trocken-Offset-Verfahrens, da dieses Verfahren häufig ohnehin für den Dekor-Druck eingesetzt wird und somit während des Herstellungsprozess zur Verfügung steht.

Ebenso werden bei der Erzeugung von zylinderförmigen Betrachtungselementen geringere Anforderungen an das Herstellungsverfahren gestellt als bei der Erzeugung von punktförmigen Betrachtungselementen, wie beispielsweise sphärischen Mikrolinsen. Bestehen die Betrachtungselemente beispielsweise aus Zylinderlinsen oder aus ähnlichen Strukturen, so können diese mit Hilfe eines Laminationsblechs, bevorzugt in einem Heißlaminationsverfahren hergestellt werden. Auch eine dem Laminieren nachgelagerte Prägung zur Erzeugung des Linsenrasters ist möglich. Insbesondere die Lamination ist ein Verfahren, dass bei der Herstellung von kartenförmigen Datenträgern typischerweise ohnehin zur Verfügung steht und zudem unaufwändig ist. Entsprechend bleibt der Herstellungsaufwand gering, da für das erfindungsgemäße Sicherheitselement keine speziellen oder zusätzlichen Herstellungsverfahren vorgesehen werden müssen. Die Zylinderlinsen können dabei entlang ihrer Längsachse segmentiert sein. Ebenso kann die Form der Zylinderlinsen abbildend oder anderweitig, beispielsweise elliptisch sein.

Zudem ist das erfindungsgemäße Sicherheitselement zur Einbringung in kartenförmige Datenträger vorgesehen, die eine beispielsweise gegenüber papierähnlichen Wertdokumenten, wie Banknoten, deutlich erhöhte Dicke aufweisen. Diese liegt, wie erwähnt, typischerweise im Bereich zwischen 0,3 mm und 5 mm, bevorzugt zwischen 0,5 mm und 1 mm und beträgt beispielsweise 0,7 mm. Entsprechend kann die gesamte Dicke des kartenförmigen Datenträgers für die Darstellung des Sollbildes in dem Sicherheitselement genutzt werden, ohne dass dies zu einer Verdickung des kartenförmigen Datenträgers führt. Der Abstand zwischen dem aufgedruckten Motivbild und dem Betrachtungsraster kann daher der Dicke des kartenförmigen Datenträgers entsprechen, für den das Sicherheitselement vorgesehen ist. Dieser erhöhte Abstand verringert zusätzlich die Anforderungen an die in dem Sicherheitselements stattfindende optische Abbildung. Beispielsweise reduziert sich die notwendige Genauigkeit und Auflösung, die bei der Herstellung des Betrachtungsrasters einzuhalten ist. Weiterhin kann ein Betrachtungsraster mit einem relativ großen Abstand d der Zylinderachsen der Betrachtungselemente gewählt werden. Dieser Achsenabstand d liegt vorteilhafterweise zwischen 50 $\mu$m und 300 $\mu$m, er liegt bevorzugt zwischen 120 $\mu$m und 200 $\mu$m. Ebenso kann die notwendige Untergrenze für die Auflösung des aufgedruckten Motivbildes angehoben werden oder andernfalls ein Sollbild mit hoher Auflösung dargestellt werden. Im Ergebnis sinken die Anforderungen an die Herstellung des Sicherheitselements durch dessen Verwendung in kartenförmigen Datenträger weiter.

Wie oben erwähnt kann für das Sicherheitselement prinzipiell die gesamte Dicke des kartenförmigen Datenträgers ausgenutzt werden. Um jedoch ein einheitliches Erscheinungsbild und eine gleich bleibende mechanische Stabilität des kartenförmigen Datenträgers zu gewährleisten, weist das Sicherheitselement eine geringere Dicke auf als der kartenförmigen Datenträger. Die Dicke des Sicherheitselements liegt vorteilhafterweise zwischen 100 $\mu$m und 500 $\mu$m, bevorzugt zwischen 270 $\mu$m und 325 $\mu$m, und beträgt besonders bevorzugt etwa 300 $\mu$m.

Um eine geeignete Beabstandung von aufgedrucktem Motivbild und Betrachtungsraster sicherzustellen, sind diese bevorzugt durch eine optische Abstandsschicht beabstandet. Die optische Abstandsschicht ist eine klare und transparente oder transluzente Schicht und umfasst beispielsweise eine Kunststofffolie und/oder eine Lackschicht. Vorzugsweise wird das Motivbild auf die optische Abstandsschicht oder auf ein an die optische Abstandsschicht angrenzendes Substrat aufgedruckt. Besonders bevorzugt sind das Motivbild und das Betrachtungsraster miteinander fest verbunden und an einander gegenüberliegenden Flächen der optischen Abstandsschicht angeordnet. Dadurch werden eine einfache Herstellung des Sicherheitselements und eine zuverlässige Erzeugung der gewünschten optischen Effekte gewährleistet.

Die Verwendung von zylinderartigen Betrachtungselementen hat neben den genannten Vorteilen die Einschränkung, dass bei einer Verkippung entlang der Zylinderachsen, das heißt um eine Senkrechte der Zylinderachsen herum, im Wesentlichen keine Veränderung des dargestellten Sollbildes stattfindet. Erfindungsgemäß verlaufen die Achsen der zylinderartigen Betrachtungselemente daher nicht entlang der Hauptachsen des kartenförmigen Datenträgers, für den das Sicherheitselement vorgesehen ist, sondern weisen einen von null verschiedenen Winkel gegenüber beiden Hauptachsen des kartenförmigen Datenträgers auf. Die Hauptachsen definieren dabei die beiden Richtungen, in die ein Benutzer den kartenförmigen Datenträger üblicherweise verkippt, mit anderen Worten die Richtungen für die bei einer Verkippung eine Veränderung des Sollbildes auftreten soll. Typischerweise werden diese Hauptachsen durch die Seitenkanten des kartenförmigen Datenträgers festgelegt, da ein Benutzer die Tendenz hat einen kartenförmigen Datenträger in Richtung der Seitenkanten zu verkippen. Der kartenförmige Datenträger umfasst einen Kartenkörper, der vorzugsweise rechteckig, gegebenenfalls mit abgerundeten Ecken, ausgebildet ist, wie dies typischerweise bei den kartenförmigen Datenträgern der Eingangs erwähnten Art, insbesondere bei Karten gemäß dem ID0-, dem ID1- oder dem ID2-Format der Fall ist. Der Kartenkörper ist vorzugsweise vollständig aus einem geeigneten Kunststoff aufgebaut, vorzugsweise aus Polycarbonat. Ein solcher kartenförmiger Datenträger wird von einem Benutzer typischerweise "quer" gehalten, das heißt mit einer Beschriftung oder der längeren Seitenkante in horizontaler Richtung. Entsprechend liegen die beiden Hauptachsen eines solchen kartenförmigen Datenträgers in horizontaler und vertikaler Richtung, das heißt sie weisen entlang den beiden durch die Seitenkanten definierten Richtungen. Entsprechend liegen die Hauptachsen des kartenförmigen Datenträgers zueinander senkrecht. Bei einem solchen kartenförmigen Datenträger ist der Winkel $\gamma$ zwischen Zylinderachsen des Betrachtungselementes und einer ersten Hauptachse dann ungleich 0° und ungleich Vielfachen von 90°. Im Folgenden wird davon ausgegangen, dass das Sicherheitselement mit dem kartenförmigen Datenträger fest verbunden ist.

Wie erwähnt verlaufen die Zylinderachsen der zylinderartigen Betrachtungselemente nicht entlang der Hauptachsen des kartenförmigen Datenträgers. Sie verlaufen somit schräg auf dem kartenförmigen Datenträger und insbesondere nicht in vertikaler oder horizontaler Richtung. Bei einer Verkippung des kartenförmigen Datenträgers entlang, das heißt in Richtung jeder dieser beiden Hauptachsen findet somit in jedem Fall zugleich auch eine Verkippung des Sicherheitselements um die Zylinderachsen des Betrachtungselements statt, das heißt es ändert sich der azimutale Winkel unter dem die Zylinderachsen betrachtet werden. Entsprechend verändert sich - ein geeignetes aufgedrucktes Motivbild vorausgesetzt - die Darstellung des Sollbildes bei einer Verkippung entlang einer der Hauptachsen des kartenförmigen Datenträgers. Beispielsweise ist die Richtung in der sich ein Söllbild beim Verkippen bewegt identisch, unabhängig davon entlang welcher beider Hauptachsen der kartenförmige Datenträger verkippt wird, was einen unerwarteten Effekt für einen Betrachter darstellt. Dabei bewegt sich das Sollbild jedoch im Allgemeinen mit verschiedenen Geschwindigkeiten, in Abhängigkeit des Winkels zwischen jeweiliger Hauptachse und Zylinderachsen.

Bevorzugt liegt der Winkel $\gamma$ zwischen 10° und 80°, bevorzugt zwischen 30° und 60°, und beträgt besonders bevorzugt 45°. Ist der Winkel $\gamma$ = 45° so verändert sich die Blickrichtung auf das Sicherheitselement sowohl bei einer Verkippung entlang der ersten Hauptachse als auch bei einer Verkippung entlang der zweiten Hauptachse im gleichen Umfang. Entsprechend ist die gleiche Veränderung und - wenn eine Bewegung des Sollbildes vorgesehen ist - die gleiche Bewegungsgeschwindigkeit des dargestellten Sollbildes zu beobachten, unabhängig davon entlang welcher Hauptachse der kartenförmige Datenträger verkippt wird.

In einer bevorzugten Ausgestaltung bewegt sich das dargestellte Sollbild bei einer Verkippung entlang der ersten oder zweiten Hauptachse in waagrechter, horizontaler Richtung.

In einer bevorzugten Ausgestaltung sind die Betrachtungselemente des Betrachtungsrasters periodisch angeordnet, das heißt global, über das gesamte Sicherheitselement hinweg, oder lokal periodisch angeordnet, wobei sich im letzteren Fall die lokalen Periodenparameter im Verhältnis zur Periodizitätslänge vorzugsweise nur langsam ändern.

Die Periodizitätslänge bzw. die lokale Periodizitätslänge, das heißt der Achsenabstand d der zylinderartigen Betrachtungselemente, liegt vorteilhafterweise zwischen 50 $\mu$m und 300 $\mu$m und bevorzugt zwischen 120 $\mu$m und 200 $\mu$m. Möglich ist auch eine abrupte Änderung der Periodizitätslänge, wenn diese zuvor über eine im Vergleich zur Periodizitätslänge große Strecke, beispielsweise für mehr als 20, 50 oder 100 Periodizitätslängen, konstant oder nahezu konstant gehalten wurde.

Die Betrachtungselemente können durch lang gestreckte Zylinderlinsen gebildet sein, deren Ausdehnung in Längsrichtung vorteilhafterweise mehr als 250 $\mu$m, bevorzugt mehr als 300 $\mu$m, besonders bevorzugt mehr als 500 $\mu$m und insbesondere mehr als 1 mm beträgt. Im Idealfall erstrecken sich die zylinderartigen Betrachtungselemente entlang ihrer Achsen durchgängig über das gesamte Sicherheitselement.

Im Rahmen dieser Beschreibung kann das Sicherheitselement also sowohl als permanentes Sicherheitselement durch ein fest miteinander verbundenes Betrachtungsraster und Motivbild gebildet sein, als auch durch ein Betrachtungsraster und ein zugehöriges Motivbild, welche räumlich getrennt voneinander vorliegen, wobei die beiden Elemente beispielsweise zu Prüfungszwecken beim Übereinanderlegen ein temporär vorliegendes Sicherheitselement bilden. Nachfolgend beziehen sich Aussagen über das Bewegungsverhalten oder den visuellen Eindruck des Sicherheitselements sowohl auf fest verbundene permanente Sicherheitselemente als auch auf durch Übereinanderlegen gebildete temporäre Sicherheitselemente.

Durch die Erfindung ist es möglich einen dreidimensionalen Eindruck des Sollbildes zu erzeugen, indem das dargestellte Sollbild in einer bestimmten Tiefe unter oder Höhe über dem Sicherheitselement dargestellt wird, und zugleich eine Bewegung des dargestellten Sollbildes beim Verkippen des kartenförmigen Datenträgers. Aufgrund der Anordnung der Zylinderachsen, die nicht entlang der Hauptachsen des kartenförmigen Datenträgers verlaufen, sondern schräg auf dem Datenträger, stellt sich dem Betrachter das Sollbild beim Verkippen um jede der beiden Hauptachsen sowohl dreidimensional als auch beweglich dar. Eine Kombination dieser optischen Effekte ist anderweitig nicht oder nur mit hohem Aufwand erreichbar. Insbesondere eine vertikale bzw. horizontale Anordnung der Linsen ermöglicht dem Betrachter beim Verkippen des Datenträgers um die jeweiligen Hauptachsen lediglich entweder einen Tiefeneffekt oder eine Bewegung des Sollbildes, jedoch keine Kombination der beiden Effekte. Für einen Betrachter ist diese Kombination von optischen Effekten sehr auffällig und überraschend.

Das Motivbild kann auch in verschiedene Bereiche unterteilt sein, in denen die Zellen jeweils identische Form aufweisen. Dies bewirkt, dass beim Kippen des Sicherheitselements Teile des Motivs, die verschiedenen Bereichen zugeordnet sind, bei unterschiedlichen Kippwinkeln springen. Sind die Bereiche mit unterschiedlichen Zellen groß genug, dass sie mit bloßem Auge erkennbar sind, so kann auf diese Weise eine zusätzliche, sichtbare Information in dem Sicherheitselement untergebracht werden. Sind die Bereiche dagegen mikroskopisch, also nur mit vergrößernden Hilfsmitteln erkennbar, so kann auf diese Weise eine zusätzliche, versteckte Information in dem Sicherheitselement untergebracht werden, die als Sicherheitsmerkmal höherer Stufe dienen kann.

Das Sicherheitselement stellt bevorzugt ein Wechselbild, ein Bewegungsbild oder ein Morphbild dar, was durch geeignete, gegebenenfalls ortabhängige Parameter und Funktionen der oben erläuterten Abbildungsfunktion erreicht werden kann. Damit können auch Motivdrehungen, 3D-Effekte, wie ein Schweben des Sollbildes über oder unter dem Sicherheitselement, Pumpeffekte, durch Vergrößerung oder Verkleinerung des Sollbildes, Kippeffekte und sonstige Bildumwandlungen realisiert werden.

Erfindungsgemäß umfasst das Sicherheitselement zusätzlich eine laserbeschreibbare Schicht, beispielsweise aus Polycarbonat, welche es gestattet, weitere Markierungen per Laserbestrahlung in das Sicherheitselement einzubringen. Solche Markierungen können nachträglich, das heißt nach dem eigentlichen Herstellungsverfahren des Sicherheitselementes, eingebracht werden, beispielsweise zu Personalisierungs- und Individualisierungszwecken. Die laserbeschreibbare Schicht ist dabei bevorzugt derart angeordnet, dass die Markierungen mit Hilfe einer Laserbestrahlung über das Betrachtungsraster, das heißt durch das Betrachtungsraster hindurch eingebracht werden können. Dabei können beispielsweise die optische Abstandsschicht und/ oder das Betrachtungsraster aus einem geeigneten, laserbeschreibbaren Material bestehen.

Bevorzugt bilden die per Laser eingeschriebenen Markierungen ein Kippbild. Ein solches Laserkippbild umfasst eine Mehrzahl von per Laserbestrahlung eingeschriebenen Bildern, welche jeweils unter verschiedenen Winkeln gegenüber einer Hauptachse des kartenförmigen Datenträgers in das Sicherheitselement eingeschrieben werden. Ein erstes Bild wird somit unter einem ersten Winkel gegenüber einer Hauptachse eingeschrieben und ein zweites Bild wird unter einem zweiten, von dem ersten Winkel verschiedenen Winkel gegenüber einer Hauptachse eingeschrieben. Der Laserstrahl schließt dabei bevorzugt eine spitzen Winkel mit den Zylinderachsen ein. Bekanntermaßen rekonstruieren diese Bilder für einen Betrachter unter dem gleichen Betrachtungswinkel, unter den sie eingeschrieben wurden, so dass die verschiedenen Bilder bei der gleichen Verkippung, die zum Einschreiben der Bilder verwendet wurde, alternierend betrachtet werden können. Durch die erfindungsgemäße Verwendung eines schrägen zylinderartigen Betrachtungsrasters lassen sich diese Bilder jedoch auch zugleich unter allen Winkeln rekonstruieren, die bezüglich den Zylinderachsen des Betrachtungsrasters den gleichen Winkel aufweisen, wie der Winkel unter dem die Bilder eingeschrieben wurden. Es ergibt sich somit ein Bereich, der durch einen Kegel um die Zylinderachsen definiert ist, in dem ein eingeschriebenes Bild unverändert wahrgenommen werden kann.

Weist der kartenförmige Datenträger zueinander rechtwinklige Hauptachsen auf und weisen die Zylinderachsen des Betrachtungsrasters einen Winkel von 45° gegenüber den beiden Hauptachsen auf, so kann ein erstes eingeschriebenes Bild, welches unter einem ersten Winkel gegenüber der ersten Hauptachse eingeschrieben wurde und einen von Null verschiedenen Kippwinkel gegenüber der Flächennormalen des Sicherheitselementes aufweist, nicht nur bei einer entsprechenden Verkippung entlang der ersten Hauptachse, sondern auch bei dem gleichen Kippwinkel gegenüber der Flächennormalen des Sicherheitselementes bei einer Verkippung entlang der zweiten Hauptachse des kartenförmigen Datenträgers wahrgenommen werden. Entsprechend kann die Abfolge von Bildern des Kippbildes sowohl bei einer Verkippung entlang der ersten Hauptachse des kartenförmigen Datenträgers als auch bei einer Verkippung entlang der zweiten Hauptachse des Datenträgers betrachtet werden. Vorzugsweise werden wenigstens zwei Bilder in die laserbeschreibbare Schicht eingeschrieben, welche einen Kippwinkel, das heißt einen Winkel gegenüber der Flächennormalen des Sicherheitselementes von -30° und +30° aufweisen.

Beim ersten Erfindungsaspekt stellt die Rasterbildanordnung des Sicherheitselements ein einzelnes Sollbild dar. In ihrem zweiten Aspekt umfasst die Erfindung Gestaltungen, in denen mehrere Sollbilder gleichzeitig oder im Wechsel dargestellt werden. Eine solches Sicherheitselements umfasst dann eine Rasterbildanordnung zur Darstellung einer Mehrzahl von Sollbildern mit einem aufgedruckten Motivbild, das in eine Mehrzahl von Zellen eingeteilt ist, in denen jeweils abgebildete Bereiche der Sollbilder angeordnet sind, und einem zylinderartigen Betrachtungsraster aus einer Mehrzahl von periodisch angeordneten, zylinderförmigen Betrachtungselementen mit jeweils zueinander parallelen Zylinderachsen zur Rekonstruktion der Sollbilder bei der Betrachtung des Motivbilds mithilfe des Betrachtungsrasters, wobei das Betrachtungsraster und das Motivbild unter einem vorgegebenen Abstand zueinander angeordnet sind.

Mit Vorteil stellt die Rasterbildanordnung ein Wechselbild, ein Bewegungsbild oder ein Morphbild dar. Eine Bilderfolge kann mit Vorteil beim Kippen entlang einer vorgegebenen Richtung ablaufen. Im allgemeinen Fall können allerdings auch Maskenfunktionen gewählt werden, die eine Bilderfolge durch gekrümmte, mäanderförmige oder spiralförmige Kippbewegungen ablaufen lassen.

Während bei Wechselbildern (Kippbildern) oder anderen Bewegungsbildern idealerweise jeweils nur ein Sollbild gleichzeitig sichtbar ist, enthält die Erfindung auch Gestaltungen, bei denen für den Betrachter gleichzeitig zwei oder mehr Sollbilder fi sichtbar sind. Dabei stellt die Masterfunktion F mit Vorteil die Summenfunktion, die Maximumsfunktion, eine ODER-Verknüpfung, eine XOR-Verknüpfung oder eine andere logische Verknüpfung dar.

Um eine geeignete Beabstandung von aufgedrucktem Motivbild und Betrachtungsraster sicherzustellen, sind diese durch eine optische Abstandsschicht beabstandet. Die optische Abstandsschicht ist eine klar und transparente oder transluzente Schicht und umfasst beispielsweise eine Kunststofffolie und/ oder eine Lackschicht. Erfindungsgemäß wird das Motivbild auf die optische Abstandsschicht oder auf ein an die optische Abstandsschicht angrenzendes Substrat aufgedruckt. Besonders bevorzugt sind das Motivbild und das Betrachtungsraster miteinander fest verbunden und an einander gegenüberliegenden Flächen der optischen Abstandsschicht angeordnet.

Nach einer vorteilhaften Weiterbildung der Erfindung weist das Sicherheitselement in beiden Aspekten eine opake Abdeckschicht zur bereichsweisen Abdeckung der Rasterbildanordnung auf. Innerhalb des abgedeckten Bereichs treten somit keine optischen Effekte des Sicherheitselements auf, so dass die optischen Effekte mit herkömmlichen Informationen oder mit anderen Effekten kombiniert werden kann. Diese Abdeckschicht liegt mit Vorteil in Form von Mustern, Zeichen oder Codierungen vor und/ oder weist Aussparungen in Form von Mustern, Zeichen oder Codierungen auf.

In einer vorteilhaften Ausgestaltung kann das Sicherheitselement einen transparenten oder ausgesparten Bereich eines Datenträgers, wie einen Fensterbereich, überspannen. Dabei können auf unterschiedlichen Seiten des Datenträgers unterschiedliche Erscheinungsbilder realisiert werden. Auch beidseitige Gestaltungen kommen infrage, bei denen beiderseits eines Motivbilds Betrachtungsraster angeordnet sind.

Die erfindungsgemäßen Rasterbildanordnungen können mit anderen Sicherheitsmerkmalen, beispielsweise - wie bereits beschrieben - mit Laserkippbildern, aber auch mit diffraktiven Strukturen oder mit Hologrammstrukturen in allen Ausführungsvarianten, kombiniert werden

In beiden Erfindungsaspekten können die Bildinhalte einzelner Zellen des Motivbilds nach der Bestimmung der Bildfunktion miteinander vertauscht sein.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:

Fig.1     eine perspektivische Darstellung eines kartenförmigen Datenträgers,

Fig. 2     schematisch den Schichtaufbau eines Sicherheitselements im Querschnitt,

Fig. 3     eine Draufsicht auf ein Sicherheitselement mit Sollbild,

Fig. 4     eine Draufsicht auf ein Betrachtungsraster mit Zylinderlinsen,

Fig. 5     eine Draufsicht auf ein aufgedrucktes Motivbild, und

Fig. 6     eine perspektivische Darstellung einer Variante des Sicherheitselements.

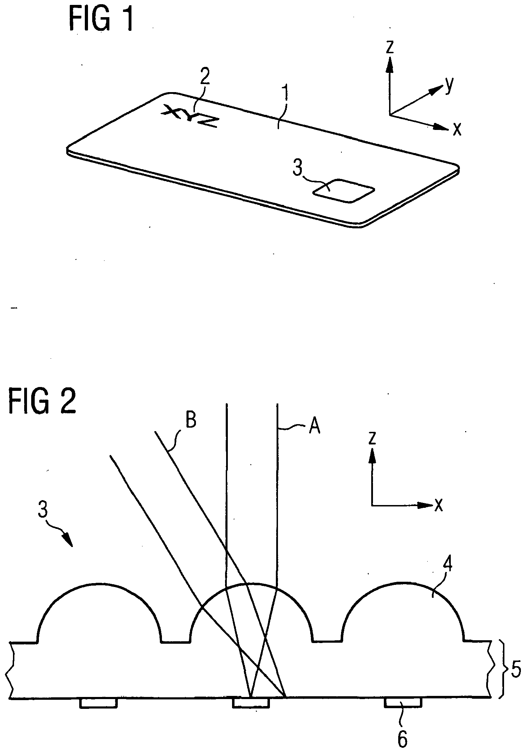

In Figur 1 ist ein erfindungsgemäßer kartenförmiger Datenträger 1 in Form einer Kreditkarte dargestellt. Dieser umfasst eine auf dem Kartenkörper angebrachte Aufschrift 2 mit gegebenenfalls personalisierten Daten des Benutzers, sowie ein Sicherheitselement 3, das auf der Oberfläche des Kartenkörpers des kartenförmigen Datenträgers 1 direkt angeordnet sein kann oder in eine durchgängige oder nicht-durchgängige Aussparung des Kartenkörpers eingesetzt ist. Der Kartenkörper des kartenförmigen Datenträgers 1 besteht aus Polycarbonat und weist eine Dicke von 0,7 mm auf. Im Folgenden werden die Begriffe "kartenförmiger Datenträger" und "Kartenkörper" synonym verwendet. Der kartenförmige Datenträger 1 ist rechteckig ausgebildet, so dass dessen Seitenkanten die rechtwinklig zueinander liegenden Hauptachsen des kartenförmigen Datenträgers 1 definieren, da ein Benutzer einen solchen kartenförmigen Datenträger 1 typischerweise entlang einer der beiden Seitenkanten verkippt. Dabei weisen in Figur 1 die Hauptachsen des kartenförmigen Datenträgers in x- bzw. y-Richtung, während die z-Richtung die Flächennormale sowohl des kartenförmigen Datenträgers 1 als auch des Sicherheitselementes 3 beschreibt. Ein solcher kartenförmiger Datenträger 1 wird von einem Benutzer üblicherweise "quer" gehalten, so dass die erste Hauptachse, welche in x-Richtung zeigt, in horizontaler Richtung verläuft, während die zweite Hauptachse, welche in y-Richtung zeigt, in vertikaler Richtung verläuft. Eine derartige Ausrichtung des kartenförmigen Datenträgers 1 bei Betrachtung durch einen Betrachter wird auch dadurch unterstützt, dass eine in x-Richtung verlaufende Beschriftung 2 vorgesehen ist. Entsprechend werden diese Hauptachsen im Folgenden auch als horizontale Hauptachse und vertikale Hauptachse bezeichnet.

In Figur 2 ist ein Schnitt durch das Sicherheitselement 3 entlang der horizontalen Hauptachse dargestellt. Das Sicherheitselement umfasst ein Betrachtungsraster 8 aus parallel angeordneten Zylinderlinsen 4, welche durch eine optische Abstandsschicht 5 von einem auf die optische Abstandsschicht 5 aufgedruckten Motivbild 6 beabstandet sind. Das Motivbild 6 ist im Toray-Trocken-Offset-Verfahren aufgedruckt. Die Zylinderlinsen, welche zylindrische Lentikular- bzw. Mikrolinsen sein können, weisen einen Radius von 170 $\mu$m und eine Dicke von 40 $\mu$m auf. Die optische Abstands- schicht 5 ist eine hochtransparente, klare Schicht, die einen effektiven Abstand zwischen den Zylinderlinsen 4 und dem aufgedruckten Motivbild 6 von 300 $\mu$m schafft. Wie in Figur 2 schematisch dargestellt, erzeugen die Zylinderlinsen 4 eine optische Abbildung derart, dass ein linienförmiger Bereich des aufgedruckten Motivbildes 6 unter einer vorgegebenen Betrachtungsrichtung A beobachtet werden kann. Dieser linienförmige Bereich ist in der Schnittdarstellung von Figur 2 punktförmig dargestellt und verläuft in Richtung der Achse der Zylinderlinsen 6. Somit erscheint die Zylinderlinse 4 unter der Betrachtungsrichtung A in der Farbe des linienförmigen Bereichs des Motivbildes 6, beispielsweise schwarz. Unter einer anderen Betrachtungsrichtung B lässt sich dagegen ein Bereich erkennen, der neben dem aufgedruckten Motivbild 6 liegt. Entsprechend erscheint unter der Betrachtungsrichtung B die entsprechende Zylinderlinse 4 in der Farbe des Hintergrundbildes, beispielsweise weiß. Die Periodizität des Betrachtungsrasters ist über dem gesamten Sicherheitselement 3 konstant, wobei der Achsenabstand benachbarter Zylinderlinse 80 $\mu$m beträgt. Die Auflösung des aufgedruckten Motivbildes 6, das heißt die minimale Strichstärke liegt zwischen 25 und 40 $\mu$m. Die Zylinderlinsen 6 und die optische Abstandsschicht können aus PET (Polyethylenterephthalat), Polycarbonat, einem anderweitigen Kunststoff oder auch aus Glas bestehen.

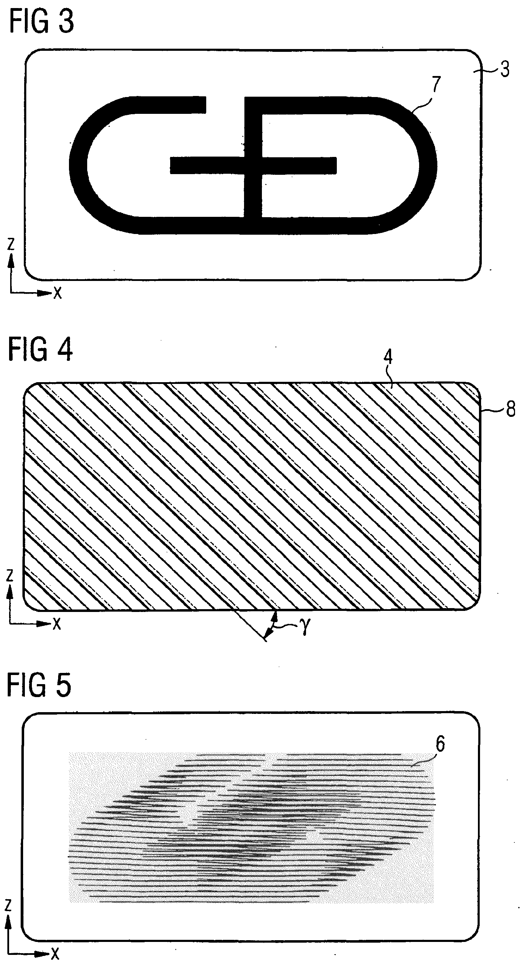

Die Figuren 3, 4 und 5 zeigen Draufsichten auf das Sicherheitselement 3 bzw. auf einzelne Schichten davon. In Figur 3 ist das durch das Sicherheitselement 3 dargestellte Sollbild 7 in Form eines Logos gezeigt. In Figur 4 ist das Betrachtungsraster 8 mit den parallel angeordneten Zylinderlinsen 4 in Draufsicht dargestellt. Die Zylinderlinsen 4 weisen einen Winkel $\gamma$ von -45° gegenüber der horizontalen Hauptachse des kartenförmigen Datenträgers 1 auf. In Figur 5 ist das aufgedruckte Motivbild 6 dargestellt, welches beim Zusammenwirken mit dem in Figur 4 dargestellten Betrachtungsraster 8 das in Figur 3 dargestellte Sollbild 7 in Draufsicht erzeugt.

Das dargestellte Sicherheitselement 3 erzeugt sowohl bei einer Verkippung entlang der horizontalen Hauptachse des kartenförmigen Datenträgers 1 als auch bei einer Verkippung entlang der vertikalen Hauptachse des kartenförmigen Datenträgers 1 eine Bewegung des in Figur 3 dargestellten Sollbildes 7 in horizontaler Richtung, wobei die Geschwindigkeit der Bewegung bei einer Verkippung entlang der horizontalen Hauptachse des kartenförmigen Datenträgers 1 als auch bei einer Verkippung entlang der vertikalen Hauptachse des kartenförmigen Datenträgers 1 identisch ist. Die entsprechende Matrix $A(x, y) = \begin{pmatrix} \cos \gamma & -\sin \gamma \\ \sin \gamma & \cos \gamma \end{pmatrix} \cdot \begin{pmatrix} a_{11}(x, y) & 0 \\ a_{21}(x, y) & 1 \end{pmatrix} \cdot \begin{pmatrix} \cos \gamma & \sin \gamma \\ -\sin \gamma & \cos \gamma \end{pmatrix}$ mit

$\begin{pmatrix} a_{11}(x, y) & 0 \\ a_{21}(x, y) & 1 \end{pmatrix} = \begin{pmatrix} v_1(x, y) \cdot \cos \phi_1(x, y) & 0 \\ v_1(x, y) \cdot \sin \phi_1(x, y) & 1 \end{pmatrix}$ ist somit ortsunabhängig, wobei Winkel $\gamma$ = -45°, Winkel $\phi_1$ = +45°

und $v_1$ = const. ist.

In den Figuren 3, 4 und 5 ist lediglich ein einziges Sollbild 7 dargestellt. Ebenso können mehrere Sollbilder 7 zugleich, überlappend oder nebeneinander in dem Sicherheitselement 3 vorgesehen werden.

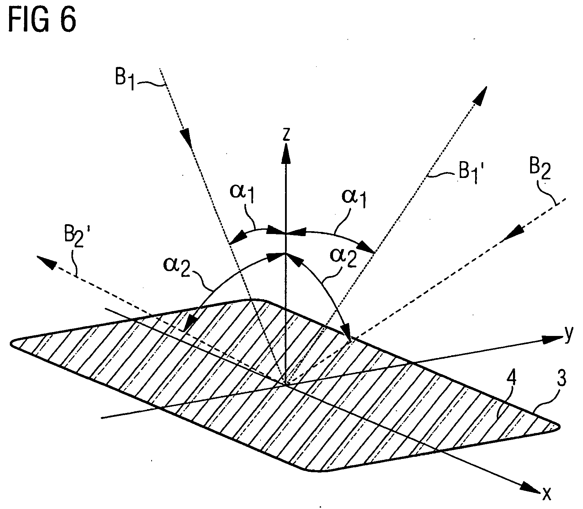

In Figur 6 ist eine Variante des zuvor dargestellten Sicherheitselementes 3 dargestellt, welches eine laserbeschreibbare Schicht umfasst, welche in der dargestellten Variante durch die optische Abstandsschicht 5, beispielsweise aus Polycarbonat, gebildet wird. Das Sicherheitselement 3 enthält wiederum ein Betrachtungsraster aus Zylinderlinsen 4, welche mit der x-Achse, das heißt der horizontalen Hauptachse des kartenförmigen Datenträgers 1 einen Winkel von -45° bilden. In das Sicherheitselement 3 wird nun in einer ersten Richtung $B_1$ per Laserbestrahlung ein erstes Bild eingeschrieben. Dabei verläuft der Laserstrahl innerhalb der x-z-Ebene und bildet mit der z-Achse, das heißt der Flächennormalen des Sicherheitselementes 3, einen Kippwinkel $\alpha_1$. Aufgrund der schrägen Anordnung der Zylinderlinsen 4 unter 45° kann das eingeschriebene Bild nun nicht nur in der Betrachtungsrichtung $B_1$, das heißt der Richtung in der das Bild eingeschrieben wurde, beobachtet werden, sondern auch in der Betrachtungsrichtung $B_1'$, welche in der y-z-Ebene verläuft und mit der z-Achse den gleichen Kippwinkel $\alpha_1$ bildet. In ähnlicher Art und Weise wird entlang einer zweiten Bestrahlungsrichtung $B_2$ ein zweites Bild per Laserbestrahlung in die laserbeschreibbare Schicht des Sicherheitselementes 3 eingeschrieben. Die Beschriftungsrichtung $B_2$ verläuft wiederum in der x-z-Ebene und bildet mit der z-Achse einen Kippwinkel $\alpha_2$. Dieses zweite Bild kann nun nicht nur in der Betrachtungsrichtung $B_2$ wahrgenommen werden, sondern auch in der Betrachtungsrichtung $B_2'$, welche in der y-z-Ebene liegt und mit der z-Achse den gleichen Kippwinkel $\alpha_2$ bildet.

Somit werden die verschiedenen Bilder unter verschiedenen Richtungen $B_1$ und $B_2$ eingeschrieben, welche verschiedenen Verkippungen entlang der horizontalen Hauptachse des kartenförmigen Datenträgers 1 entsprechen. Die verschiedenen Bilder des Kippbildes können jedoch nicht nur bei einer Verkippung entlang der horizontalen Hauptachse alternierend betrachtet werden, sondern auch bei einer Verkippung entlang der vertikalen Hauptachse des kartenförmigen Datenträgers 1. In der dargestellten Variante sind die Kippwinkel $\alpha_1$ und $\alpha_2$ dem Betrage nach gleich und betragen -30° und +30°.

Das mit Hilfe der Figur 6 erläuterte Kippbild umfasst eine Mehrzahl von Bildern die mit Vorteil in dem gleichen Bereich der Oberfläche des Sicherheitselements 3 angeordnet sind. Dieser Bereich kann das Sicherheitselement 3 teilweise oder vollständig überdecken. Das Kippbild kann somit das Sollbild 7 ganz oder teilweise überlappen. Kippbild und Sollbild 7 können aber auch beabstandet zueinander auf dem Sicherheitselement 3 angeordnet sein. Mit Vorteil bilden Kippbild und Sollbild 7 in Kombination eine gemeinsame Information für einen Betrachter.

## Patentansprüche

1. Kartenförmiger Datenträger mit einem Kartenkörper und einem Sicherheitselement, wobei der Datenträger zwei Hauptachsen aufweist, die Seitenkanten des Kartenkörpers parallel zu den beiden Hauptachsen des Datenträgers liegen und der Datenträger vorzugsweise rechteckig, als Chip- oder Kreditkarte, als Pass oder Ausweis, im ID0-, im ID1- oder im ID2-Format ausgebildet ist, wobei das Sicherheitselement eine Rasterbildanordnung zur Darstellung eines durch eine Bildfunktion f(x,y) gegebenen Sollbildes aufweist, mit

   - einem aufgedruckten Motivbild, das in eine Mehrzahl von Zellen eingeteilt ist, in denen jeweils abgebildete Bereiche des Sollbilds angeordnet sind, und
   - einem zylinderartigen Betrachtungsraster aus einer Mehrzahl von periodisch angeordneten, zylinderförmigen Betrachtungselementen mit jeweils zueinander parallelen Zylinderachsen zur Rekonstruktion des Sollbildes bei der Betrachtung des Motivbilds mithilfe des Betrachtungsrasters, wobei das Betrachtungsraster und das Motivbild unter einem vorgegebenen Abstand zueinander angeordnet sind,
   - wobei das Motivbild und das Betrachtungsraster durch eine optische Abstandsschicht beabstandet sind, wobei das Motivbild auf die optische Abstandsschicht oder auf ein an die optische Abstandsschicht angrenzendes Substrat aufgedruckt ist und das Motivbild mit seiner Einteilung in eine Mehrzahl von Zellen durch eine Bildfunktion gegeben ist,
   - wobei Einheitszelle des Betrachtungsrasters einen Achsenabstand d der Zylinderachsen und eine durch einen Winkel $\gamma$ gegenüber einer ersten Hauptachse angegebene Richtung der Zylinderachsen aufweist,

   **dadurch gekennzeichnet, dass** die Zylinderachsen in einer von den Hauptachsen verschiedenen Richtung liegen und die Abstandsschicht aus laserbeschreibbaren Material, bevorzugt aus Polycarbonat, besteht und mit Hilfe einer Laserbestrahlung, bevorzugt durch das Betrachtungsraster, beschreibbar ist.

2. Datenträger nach Anspruch 1, **dadurch gekennzeichnet, dass** der Kartenkörper aus Kunststoff besteht, vorzugsweise aus Polycarbonat.

3. Datenträger nach einem der Ansprüche 1 oder 2, **dadurch gekennzeichnet, dass** die Hauptachsen zueinander rechtwinklig angeordnet sind.

4. Datenträger nach einem der Ansprüche 1 bis 3, **dadurch gekennzeichnet, dass** der Winkel $\gamma$ zwischen 10° und 80° liegt, bevorzugt zwischen 30° und 60°, und besonders bevorzugt 45° beträgt.

5. Datenträger nach einem der Ansprüche 1 bis 4, **dadurch gekennzeichnet, dass** der Achsenabstand d des Betrachtungsrasters zwischen 50 $\mu$m und 300 $\mu$m, bevorzugt zwischen 120 $\mu$m und 200 $\mu$m liegt.

6. Datenträger nach einem der Ansprüche 1 bis 5, **dadurch gekennzeichnet, dass** die zylinderförmigen Betrachtungselemente durch Zylinderlinsen gebildet sind.

7. Datenträger nach einem der Ansprüche 1 bis 6, **dadurch gekennzeichnet, dass** die zylinderförmigen Betrachtungselemente eine Ausdehnung in Längsrichtung mehr als 250 $\mu$m, bevorzugt mehr als 300 $\mu$m, besonders bevorzugt mehr als 500 $\mu$m aufweisen und sich insbesondere über das gesamte Sicherheitselement erstrecken.

8. Datenträger nach einem der Ansprüche 1 bis 7, **dadurch gekennzeichnet, dass** bevorzugt das Motivbild und das Betrachtungsraster miteinander fest verbunden und an gegenüberliegenden Flächen der optischen Abstandsschicht angeordnet sind.

9. Datenträger nach einem der Ansprüche 1 bis 8, **dadurch gekennzeichnet, dass** die Gesamtdicke des Sicherheitselements zwischen 100 $\mu$m und 500 $\mu$m, bevorzugt zwischen 270 $\mu$m und 325 $\mu$m, besonders bevorzugt bei 300 $\mu$m liegt.

10. Datenträger nach einem der Ansprüche 1 bis 9, **gekennzeichnet durch** ein Kippbild, umfassend eine Mehrzahl von per Laserbestrahlung unter jeweils verschiedenen Winkeln gegenüber einer Hauptachse eingeschriebenen Bildern, wobei bevorzugt ein Kippwinkel eines ersten eingeschriebenen Bildes gegenüber einer Flächennormalen des Sicherheitselements -30° und ein Kippwinkel eines zweiten eingeschriebenen Bildes gegenüber der Flächennormalen des Sicherheitselements +30° beträgt.

11. Verfahren zur Herstellung eines Datenträgers mit einem Sicherheitselement nach einem der Ansprüche 1 bis 10, **dadurch gekennzeichnet, dass** die optische Abstandsschicht geschaffen wird, durch die das Motivbild und das Betrachtungsraster beabstandet sind, wobei das Motivbild auf die optische Abstandsschicht oder auf ein an die optische Abstandsschicht angrenzendes Substrat aufgedruckt wird, und bevorzugt das Motivbild und das Betrachtungsraster miteinander fest verbunden und an gegenüberliegenden Flächen der optischen Abstandsschicht angeordnet werden und dass eine laserbeschreibbare Schicht, bevorzugt aus Polycarbonat, geschaffen wird, die mit Hilfe einer Laserbestrahlung, bevorzugt durch das Betrachtungsraster, beschreibbar ist.

12. Verfahren nach Anspruch 11, **dadurch gekennzeichnet, dass** das Betrachtungsraster aus Zylinderlinsen gebildet wird, die mit Hilfe eines Laminationsblechs, vorzugsweise in einem Heißlaminationsverfahren, hergestellt werden.

13. Verfahren nach einem der Ansprüche 11 oder 12, **dadurch gekennzeichnet, dass** das Motivbild mit Offsetdruck, Tiefdruck, Hochdruck, Siebdruck, oder digitalen Druckverfahren, wie Tintenstrahldruck oder Laserdruck und vorzugsweise mit dem Toray-Trocken-Offset-Verfahren aufgedruckt wird.

14. Verfahren nach einem der Ansprüche 11 bis 13, **gekennzeichnet durch** die Schritte:

 - Einschreiben eines ersten Bildes in die laserbeschreibbare Schicht per Laserbestrahlung unter einem ersten Winkel gegenüber einer Hauptachse,
 - Einschreiben eines zweiten Bildes in die laserbeschreibbare Schicht per Laserbestrahlung unter einem zweiten, von dem ersten Winkel verschiedenen Winkel gegenüber einer Hauptachse,

wobei bevorzugt ein Kippwinkel des ersten eingeschriebenen Bildes gegenüber einer Flächennormalen des Sicherheitselements -30° und ein Kippwinkel des zweiten eingeschriebenen Bildes gegenüber der Flächennormalen des Sicherheitselements +30° beträgt.

**Claims**

1.  A card-shaped data carrier with a card body and a security element, wherein the data carrier has two main axes, die lateral edges of the card body are disposed parallel to the two main axes of the data carrier and the data carrier is preferably configured to be rectangular, as a chip card or credit card, as a passport or identification card, in the ID0, the ID1 or the ID2 format, wherein the security element has a raster image arrangement for representing a desired image predetermined by an image function f(x,y), with

    - an imprinted motif image subdivided into a plurality of cells in which respectively imaged regions of the desired image are arranged, and
    - a cylinder-type viewing raster of a plurality of periodically arranged, cylinder-shaped viewing elements with respectively mutually parallel cylinder axes for reconstructing the desired image upon viewing the motif image with the aid of the viewing raster, wherein the viewing raster and the motif image are arranged at a predetermined spacing from each other,
    - wherein the motif image and the viewing raster are spaced apart by an optical spacing layer, wherein the motif image is imprinted on the optical spacing layer or on a substrate bordering on the optical spacing layer, and the motif image with its subdivision into a plurality of cells is predetermined by an image function,
    - wherein a uniform cell of the viewing raster has an axis spacing d of the cylinder axes and a direction of the cylinder axes specified by an angle γ in relation to a first main axis,

    **characterized in that** the cylinder axes are disposed in a direction that differs from the main axes and the spacing layer consists of a laser-writable material, preferably of polycarbonate, and is writable with the aid of a laser irradiation, preferably through the viewing raster.

2.  The data carrier according to claim 1, **characterized in that** the card body consists of plastic, preferably of polycarbonate.

3.  The data carrier according to any of the claims 1 or 2, **characterized in that** the main axes are arranged mutually perpendicularly.

4.  The data carrier according to any of the claims 1 to 3, **characterized in that** the angle γ is between 10° and 80°, preferably between 30° and 60°, and particularly preferably 45°.

5.  The data carrier according to any of the claims 1 to 4, **characterized in that** the axis spacing d of the viewing raster is between 50 μm and 300 μm, preferably between 120 μm and 200 μm.

6.  The data carrier according to any of the claims 1 to 5, **characterized in that** the cylinder-shaped viewing elements are formed by cylinder lenses.

7.  The data carrier according to any of the claims 1 to 6, **characterized in that** the cylinder-shaped viewing elements have an extension in the longitudinal direction of more than 250 μm, preferably more than 300 μm, particularly preferably more than 500 μm, and in particular extend over the complete security element.

8.  The data carrier according to any of the claims 1 to 7, **characterized in that** preferably the motif image and the viewing raster are interconnected permanently and arranged on opposing surfaces of the optical spacing layer.

9.  The data carrier according to any of the claims 1 to 8, **characterized in that** the overall thickness of the security element is between 100 μm and 500 μm, preferably between 270 μm and 325 μm, particularly preferably at 300 μm.

10. The data carrier according to any of the claims 1 to 9, **characterized by** a tilt image, comprising a plurality of images inscribed by laser irradiation at respectively different angles in relation to a main axis, wherein preferably a tilt angle of a first inscribed image in relation to a surface normal of the security element amounts to -30° and a tilt angle of a second inscribed image in relation to the surface normal of the security element amounts to +30°.

11. A method for manufacturing a data carrier with a security element according to any of the claims 1 to 10, **characterized in that** the optical spacing layer is created by which the motif image and the viewing raster are spaced apart, wherein the motif image is imprinted on the optical spacing layer or onto a substrate bordering on the optical spacing layer, and preferably the motif image and the viewing raster are interconnected permanently and arranged on opposing surfaces of the optical spacing layer, and that a laser-writable layer, preferably of polycarbonate, is created, which is writable with the aid of a laser irradiation, preferably through the viewing raster.

12. The method according to claim 11, **characterized in that** the viewing raster is formed of cylinder lenses manufactured with the aid of a lamination plate, preferably in a hot-lamination procedure.

13. The method according to any of the claims 11 or 12, **characterized in that** the motif image is imprinted by offset printing, gravure printing, relief printing, screen printing or digital printing methods, such as inkjet printing or laser printing and preferably by the Toray dry offset method.

14. The method according to any of the claims 11 to 13, **characterized by** the steps of:

- inscribing a first image in the laser-writable layer by laser irradiation at a first angle in relation to a main axis,
- inscribing a second image in the laser-writable layer by laser irradiation at a second angle different from the first angle in relation to a main axis,

wherein preferably a tilt angle of the first inscribed image in relation to a surface normal of the security element amounts to -30° and a tilt angle of the second inscribed image in relation to the surface normal of the security element amounts to +30°.

**Revendications**

1. Support de données en forme de carte, comportant un corps de carte et un élément de sécurité, le support de données comportant deux axes principaux, les bords latéraux du corps de carte étant parallèles aux deux axes principaux du support de données et le support de données étant de préférence réalisé sous forme rectangulaire, en tant que carte à puce ou carte de crédit, en tant que passeport ou carte d'identité, en format ID0, ID1 ou ID2, l'élément de sécurité comportant une disposition d'image en grille pour la représentation d'une image de consigne donnée par une fonction d'image f(x, y), comportant

- une image à motif imprimée divisée en une pluralité de cellules dans lesquelles des zones de l'image de consigne respectivement figurées sont disposées, et
- une grille d'observation cylindrique composée d'une pluralité d'éléments d'observation en forme de cylindres disposés périodiquement ayant des axes de cylindre respectivement parallèles entre eux pour la reconstruction de l'image de consigne lors de l'observation de l'image à motif à l'aide de la grille d'observation, la grille d'observation et l'image à motif étant disposées à un écart prédéterminé l'une par rapport à l'autre,
- cependant que l'image à motif et la grille d'observation sont espacées par une couche d'espacement optique, cependant que l'image à motif est imprimée sur la couche d'espacement optique ou sur un substrat adjacent à la couche d'espacement optique, et l'image à motif, avec sa division en une pluralité de cellules, est donnée par une fonction d'image,
- cependant qu'une cellule unitaire de la grille d'observation présente une distance axiale d des axes de cylindre et une direction des axes de cylindre indiquée par un angle γ par rapport à un premier axe principal,

**caractérisé en ce que** les axes de cylindre se trouvent dans une direction différente des axes principaux et **en ce que** la couche d'espacement consiste en du matériau inscriptible au laser, de préférence en polycarbonate, et est inscriptible à l'aide d'une irradiation laser, de préférence par la grille d'observation.

2. Support de données selon la revendication 1, **caractérisé en ce que** le corps de carte est en matière plastique, de préférence en polycarbonate.

3. Support de données selon une des revendications 1 ou 2, **caractérisé en ce que** les axes principaux sont disposés perpendiculairement l'un à l'autre.

4. Support de données selon une des revendications de 1 à 3, **caractérisé en ce que** l'angle γ se situe entre 10° et 80°, de préférence entre 30° et 60°, et particulièrement de préférence à 45°.

5. Support de données selon une des revendications de 1 à 4, **caractérisé en ce que** la distance axiale d de la grille d'observation se situe entre 50 μm et 300 μm, de préférence entre 120 μm et 200 μm.

**6.** Support de données selon une des revendications de 1 à 5, **caractérisé en ce que** les éléments d'observation en forme de cylindres sont constitués par des lentilles cylindriques.

**7.** Support de données selon une des revendications de 1 à 6, **caractérisé en ce que** les éléments d'observation en forme de cylindres présentent une extension dans le sens longitudinal supérieure à 250 $\mu$m, de préférence supérieure à 300 $\mu$m, particulièrement de préférence supérieure à 500 $\mu$m, et s'étendent en particulier sur l'ensemble de l'élément de sécurité.

**8.** Support de données selon une des revendications de 1 à 7, **caractérisé en ce que,** de préférence, l'image à motif et la grille d'observation sont fermement jointes l'une à l'autre et disposées en des surfaces opposées de la couche d'espacement optique.

**9.** Support de données selon une des revendications de 1 à 8, **caractérisé en ce que** l'épaisseur totale de l'élément de sécurité se situe entre 100 $\mu$m et 500 $\mu$m, de préférence entre 270 $\mu$m et 325 $\mu$m, particulièrement de préférence à 300 $\mu$m.

**10.** Support de données selon une des revendications de 1 à 9, **caractérisé par** une image à basculement, comprenant une pluralité d'images écrites par irradiation laser sous respectivement différents angles par rapport à un axe principal, cependant que, de préférence, un angle de basculement d'une première image écrite est de -30° par rapport à une normale à la surface de l'élément de sécurité, et un angle de basculement d'une deuxième image écrite est de +30° par rapport à une normale à la surface de l'élément de sécurité.

**11.** Procédé de fabrication d'un support de données comportant un élément de sécurité selon une des revendications de 1 à 10, **caractérisé en ce que** la couche d'espacement optique est générée, par laquelle l'image à motif et la grille d'observation sont espacées, cependant que l'image à motif est imprimée sur la couche d'espacement optique ou sur un substrat adjacent à la couche d'espacement optique, et que, de préférence, l'image à motif et la grille d'observation sont fermement jointes l'une à l'autre et disposées en des surfaces opposées de la couche d'espacement optique, et qu'une couche inscriptible au laser, de préférence en polycarbonate, est créée, laquelle est inscriptible à l'aide d'une irradiation laser, de préférence par la grille d'observation.

**12.** Procédé selon la revendication 11, **caractérisé en ce que** la grille d'observation est constituée par des lentilles cylindriques qui sont fabriquées à l'aide d'une tôle de laminage, de préférence lors d'une procédé de laminage à chaud.

**13.** Procédé selon une des revendications 11 ou 12, **caractérisé en ce que** l'image à motif est imprimée par impression offset, impression en creux, impression en relief, sérigraphie, ou par procédé d'impression numérique tel qu'impression jet d'encre ou impression laser et de préférence par le procédé offset sec Toray.

**14.** Procédé selon une des revendications de 11 à 13, **caractérisé par** les étapes:

- écriture d'une première image dans la couche inscriptible au laser par irradiation laser sous un premier angle par rapport à un axe principal,
- écriture d'une deuxième image dans la couche inscriptible au laser par irradiation laser sous un deuxième angle différent du premier angle par rapport à un axe principal,

cependant que, de préférence, un angle de basculement de la première image écrite par rapport à une normale à la surface de l'élément de sécurité est de -30°, et un angle de basculement de la deuxième image écrite par rapport à une normale à la surface est de +30°.

## FIG 1

## FIG 2

## FIG 3

## FIG 4

## FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0330733 A1
- EP 0064067 A1
- US 5712731 A
- US 20050152040 A1

**In der Beschreibung aufgeführte Nicht-Patentliteratur**

- **M.C. HUTLEY ; R. HUNT ; R.F. STEVENS ; P. SA-VANDER.** The moire magnifier. *Pure Appl. Opt.,* 1994, vol. 3, 133-142